# FASCICULE DE BREVET EUROPEEN

(11) **EP 3 161 290 B1**
(45) Date de publication et mention de la délivrance du brevet: **13.03.2019**
(21) Numéro de dépôt: 15754259.8
(22) Date de dépôt: 26.06.2015
(51) Int. Cl.: F01N 5/04

(54) **SYSTÈME MOTEUR AVEC CIRCUIT DE RECIRCULATION BASSE PRESSION DES GAZ BRÛLES**
MOTORSYSTEM MIT NIEDERDRUCK-ABGASRÜCKFÜHRUNG
ENGINE SYSTEM WITH LOW PRESSURE EXHAUST GAS RECIRCULATION

(30) Priorité: 26.06.2014 FR 1455950
(43) Date de publication de la demande: 03.05.2017
(73) Titulaire: Valeo Systèmes de Contrôle Moteur, 95800 Cergy Saint Christophe (FR)
(72) Inventeur: ANGELOT, Pierre-Julian, F-78500 Sartrouville (FR); DECOSTER, Sylvain, 78860 Saint-Nom-la-Bretèche (FR); ISMAIL, Youssef, 95800 Cergy Saint Christophe (FR)
(74) Mandataire: Garcia, Christine
(86) Numéro de dépôt international: PCT/FR2015/051737
(87) Numéro de publication internationale: WO 2015/197994

(56) Documents cités:
- EP-A2- 1 903 197
- WO-A1-2008/062254
- WO-A1-2008/075127
- WO-A1-2008/075130
- DE-A1-102011 108 204

## Description

La présente invention concerne les machines thermiques et plus particulièrement les moteurs à combustion interne à circuit de recirculation des gaz brûlés et turbocompresseur.

De nombreux moteurs diesel équipant les véhicules automobiles sont munis de turbocompresseurs pour augmenter la pression des gaz admis. Ces turbocompresseurs comportent un compresseur d'air entraîné par une turbine animée par la pression des gaz d'échappement.

L'invention s'intéresse plus particulièrement aux systèmes moteurs à recirculation des gaz d'échappement à basse pression, dans lesquels une fraction des gaz d'échappement est prélevée en aval de la turbine du turbocompresseur et mélangée aux gaz admis. Une telle boucle de recirculation, dite EGR, permet notamment de réduire la teneur en oxydes d'azote (NOx) des gaz d'échappement des moteurs.

L'article Viteck, O, Mack, J, Polášek, M, Schmerbeck, S et al, "Comparison of different EGR solutions", SAE Technical Paper 2008-01-0206, doi: 10.4271/2008-01-0206 décrit différentes architectures de boucles de recirculation EGR.

Une différence de pression minimale est nécessaire dans la boucle de recirculation pour que les gaz d'échappement circulent de la façon recherchée. C'est pour cette raison que l'on introduit dans la ligne d'échappement une vanne dite CPE, en aval de la boucle de recirculation pour créer la contre-pression nécessaire. L'existence de cette contre-pression, ou perte de charge, se traduit par une augmentation du pompage et donc de la consommation en carburant, sans réel avantage énergétique.

Le document DE102011108204A1 décrit un système moteur comportant une turbine de récupération d'énergie dans la ligne d'échappement en aval de la turbine d'un turbocompresseur, le système également comportant une ligne de recirculation des gaz d'échappement à basse pression.

Le document WO2008/075130A1 divulgue l'utilisation d'une turbine de récupération qui est accouplée à un générateur. L'énergie récupérée est utilisée pour alimenter un moteur électrique d'assistance à un vilebrequin du moteur thermique.

L'invention vise à améliorer encore la performance des moteurs à turbocompresseur et recirculation des gaz brûlés, et elle y parvient grâce à un système moteur à circuit de recirculation basse pression des gaz brûlés provenant d'un moteur thermique équipé d'un turbocompresseur, l'injection des gaz brûlés ayant lieu en amont du compresseur du turbocompresseur dans la ligne d'admission d'air, système moteur dans lequel le circuit d'échappement comporte, en aval de la turbine du turbocompresseur, une turbine de récupération d'énergie, les gaz brûlés étant prélevés en amont de cette turbine de récupération d'énergie pour être mélangés à l'air frais.

L'invention permet de réaliser la contre-pression nécessaire à la recirculation des gaz brûlés en récupérant de l'énergie qui était perdue dans les systèmes connus.

La turbine de récupération d'énergie est accouplée à un générateur électrique. L'énergie délivrée par ce générateur est utilisée au moins en partie pour alimenter un moteur électrique d'assistance à un vilebrequin du moteur thermique.

Le système moteur peut comporter un système de traitement des gaz brûlés, en amont de la turbine de récupération d'énergie.

La ligne d'échappement est avantageusement dépourvue de vanne CPE, celle-ci étant complètement remplacée par la turbine de récupération d'énergie.

L'invention a encore pour objet un véhicule, notamment automobile, équipé d'un système moteur selon l'invention.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 illustre l'introduction d'une turbine de récupération d'énergie dans la ligne d'échappement, conformément à l'invention, et
- les figures 2 à 6 sont différents exemples de systèmes moteur permettant d'exploiter l'énergie récupérée par la turbine de récupération d'énergie.

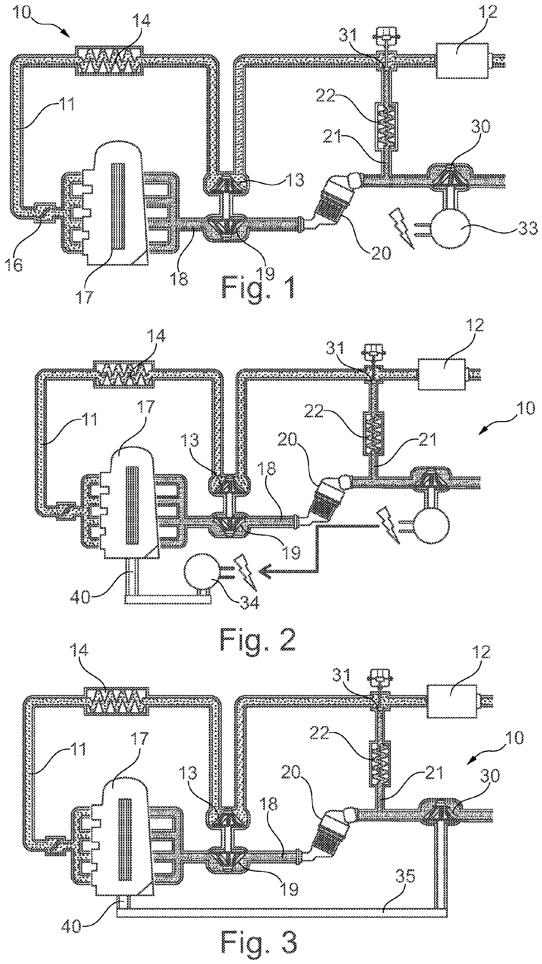

L'architecture 10 selon l'invention, représentée à la figure 1, encore appelée système moteur, comporte de façon connue en soi un moteur thermique à combustion interne 17, notamment un moteur diesel, relié à une ligne (encore appelée circuit) 11 d'admission d'air dans le moteur, comportant un filtre à air 12 en entrée, un compresseur 13 de turbocompresseur pour comprimer l'air destiné au moteur, et un refroidisseur 14 en aval du compresseur 13, pour refroidir l'air de suralimentation.

Un dispositif de réglage de débit 16, tel que par exemple une vanne papillon, permet de contrôler le débit d'air admis dans le moteur à combustion interne 17. Ce dernier est relié à une ligne d'échappement 18 qui comporte une turbine 19 de turbocompresseur, entraînée par les gaz d'échappement, accouplée au compresseur 13 de suralimentation pour l'entraîner en rotation.

Le circuit d'échappement 18 comporte également, en aval de la turbine 19, un dispositif 20 de traitement des gaz brûlés.

Un circuit 21 de recirculation, muni d'un refroidisseur 22, capte une partie des gaz brûlés, en aval de la turbine 19, pour les réinjecter avec un débit contrôlé dans le circuit d'alimentation 11, par l'intermédiaire d'une vanne 31 dite vanne EGR.

Conformément à l'invention, une turbine 30 de récupération d'énergie est placée dans la ligne 18 d'échappement, en aval du point de prélèvement des gaz brûlés, afin de créer la contre-pression nécessaire à la circulation de ceux-ci dans le circuit de recirculation 21 en direction du circuit d'alimentation 11.

La rotation de la turbine 30 est mise à profit pour assister le fonctionnement du véhicule, par exemple en soulageant l'alternateur dans la production d'électricité en entrainant un générateur 33 comme sur la figure 1.

La turbine 30 peut également apporter une assistance mécanique au moteur ou à des éléments de l'architecture moteur, tels que le turbocompresseur par exemple.

Dans l'exemple selon l'invention de la figure 2, la turbine 30 est accouplée au générateur électrique 33. Un moteur électrique 34 est accouplé mécaniquement au vilebrequin 40 du moteur 17, pour lui apporter une assistance mécanique. Ce moteur 34 est alimenté au moins en partie par l'électricité produite par le générateur 33.

Dans l'exemple non-revendiqué de la figure 3, la turbine 30 est accouplée mécaniquement au vilebrequin 40 du moteur 17 pour l'assister dans sa rotation. Cet accouplement peut s'effectuer par une transmission 35 qui peut être de tout type, par exemple à courroie(s) et/ou engrenages.

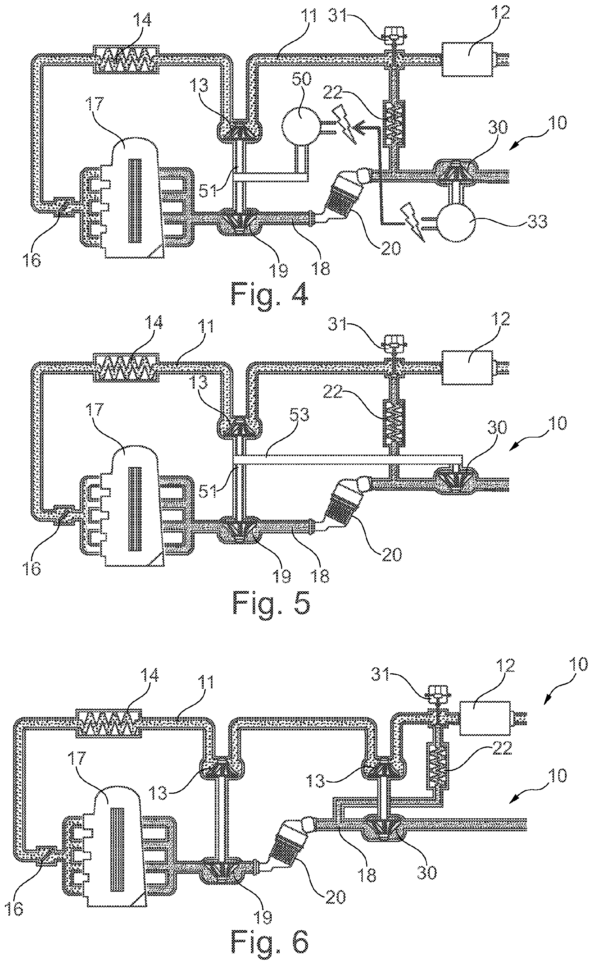

Dans l'exemple non-revendiqué de la figure 4, la turbine 30 entraîne un générateur électrique 33, comme dans l'exemple de la figure 3. Un moteur 50 est alimenté au moins en partie grâce à l'énergie produite par ce générateur 33. Le moteur 50 produit une assistance mécanique à un arbre 51 du turbocompresseur, contribuant ainsi à l'entraînement du compresseur 13 du turbocompresseur, côté alimentation en air.

Dans l'exemple non-revendiqué de la figure 5, la turbine 30 de récupération d'énergie est accouplée mécaniquement à l'aide d'une transmission 53 à l'arbre 51 du turbocompresseur, procurant ainsi une assistance mécanique à l'entraînement du compresseur 13.

Dans l'exemple non-revendiqué de la figure 6, la turbine 30 est accouplée à un second compresseur 60 disposé en amont du compresseur 13 du turbocompresseur dans le circuit 11 d'alimentation en air, et le compresseur 60 contribue à augmenter la pression de l'air de suralimentation du moteur, ce qui peut permettre de soulager le compresseur 13. Ce deuxième compresseur 60 est de préférence, comme illustré, placé en amont du compresseur 13.

L'invention permet d'extraire de l'énergie de la ligne d'échappement 18, la contre-pression générée par la turbine de récupération 30 étant sensiblement la même que celle qu'aurait générée une vanne CPE connue.

Par rapport à une architecture connue, il n'y a donc aucune augmentation de consommation de carburant ni d'augmentation des polluants.

Les fonctionnements du moteur, de la suralimentation et des systèmes de dépollution sont inchangés.

La zone de récupération maximale d'énergie se situe sur des points de fonctionnement du moteur où le véhicule est stabilisé à haute vitesse (notamment >130km/h). Ceci permet de récupérer de l'énergie de façon permanente, là où les systèmes hybrides sont inopérants.

Des simulations sur un véhicule de vitesse stabilisée à 130 km/h, avec un régime moteur de 2500 tours par minute et une pression de gaz brûlés de 13 bars, montrent qu'il est possible d'extraire environ 1,8kW isentropique. Cette puissance peut, pour ce point de fonctionnement moteur, permettre les gains d'énergie suivants :
- 1,5% de gain de consommation lorsque la turbine 30 est utilisée pour entraîner un générateur électrique, comme sur la figure 1, par rapport à une production d'énergie électrique qui serait effectuée grâce à l'alternateur,
- 0,98% en cas d'assistance électrique du moteur thermique, comme illustré à la figure 2,
- 1,38% en cas d'assistance mécanique du moteur thermique, comme illustré à la figure 3,
- 1,17% en cas d'assistance électrique du turbocompresseur, comme illustré à la figure 4, et
- 1,55% en cas d'assistance mécanique du turbocompresseur, comme illustré à la figure 5.

Bien entendu, l'invention n'est pas limitée aux exemples illustrés.

On peut par exemple modifier encore les architectures illustrées, par exemple prélever les gaz brulés en amont du dispositif de traitement 20, bien que cela soit moins favorable compte-tenu des polluants présents.

L'invention s'applique à un moteur de véhicule terrestre, naval ou aérien, ainsi qu'aux moteurs de groupes électrogènes et à toutes autres applications utilisant un moteur thermique à turbocompresseur et recirculation basse pression des gaz brûlés.

L'expression "comportant un" doit se comprendre comme étant synonyme de "comprenant au moins un".

## Revendications

1. Système moteur (10) à circuit (21) de recirculation basse pression des gaz brûlés provenant d'un moteur thermique (17) équipé d'un turbocompresseur, l'injection des gaz brûlés ayant lieu en amont du compresseur (13) du turbocompresseur dans la ligne d'admission d'air, la ligne d'échappement (18) comportant, en aval de la turbine (19) du turbocompresseur, une turbine de récupération d'énergie (30), les gaz brûlés étant prélevés en amont de la turbine (30) pour être mélangés à l'air frais, dans lequel la turbine (30) est accouplée à un générateur électrique (33) et l'énergie délivrée par le générateur (33) est utilisée au moins en partie pour alimenter un moteur électrique d'assistance à un vilebrequin (40) du moteur thermique (17).

2. Système moteur selon la revendication précédente, comportant un système de traitement des gaz brûlés (20) en amont de la turbine (30).

3. Système selon l'une quelconque des revendications 1 à 2, la ligne d'échappement (18) étant dépourvue de vanne CPE.

4. Véhicule, notamment automobile, équipé d'un système moteur tel que défini dans l'une quelconque des revendications 1 à 3.

## Patentansprüche

1. Motorsystem (10) mit Niederdruckrückführung von einem mit einem Turbolader ausgestatteten Verbrennungsmotor (17) stammenden Abgasen, wobei die Abgase stromaufwärts des Verdichters (13) des Turboladers in der Lufteinlassleitung eingespritzt werden, wobei die Abgasleitung (18) stromabwärts der Turbine (19) des Turboladers eine Energierückgewinnungsturbine (30) umfasst, wobei die Abgase stromaufwärts der Turbine (30) entnommen werden, um mit der Frischluft vermischt zu werden, wobei die Turbine (30) mit einem elektrischen Generator (33) gekoppelt ist und die von dem Generator (33) zugeführte Energie zumindest teilweise zum Speisen eines elektrischen Hilfsmotors zur Unterstützung einer Kurbelwelle (40) des Verbrennungsmotors (17) verwendet wird.

2. Motorsystem nach dem vorhergehenden Anspruch, das ein Abgasbehandlungssystem (20) stromaufwärts der Turbine (30) umfasst.

3. Motorsystem nach einem der Ansprüche 1 bis 2, wobei die Abgasleitung (18) kein EBP-Ventil aufweist.

4. Fahrzeug, insbesondere Automobil, das mit einem Motorsystem wie in einem der Ansprüche 1 bis 3 definiert ausgestattet ist.

## Claims

1. Engine system (10) with a low-pressure exhaust gas recirculation circuit (21) recirculating the exhaust gases coming from a combustion engine (17) equipped with a turbocharger, the exhaust gases being injected upstream of the compressor (13) of the turbocharger into the air intake line, the exhaust line (18) comprising, downstream of the turbine (19) of the turbocharger, an energy recuperation turbine (30), the exhaust gases being tapped off upstream of the turbine (30) to be mixed with the fresh air, in which system the turbine (30) is coupled to an electric generator (33) and the energy delivered by the generator (33) is used at least in part to power an electric motor providing assistance to a crankshaft (40) of the combustion engine (17).

2. Engine system according to the preceding claim, comprising an exhaust gas treatment system (20) upstream of the turbine (30).

3. System according to either one of Claims 1 and 2, the exhaust line (18) having no EBP valve.

4. Vehicle, notably motor vehicle, equipped with an engine system as defined in any one of Claims 1 to 3.
